Europäisches Patentamt

European Patent Office

Office européen des brevets

(11) Numéro de publication: **0 317 570 B1**

## (12) FASCICULE DE BREVET EUROPEEN

(45) Date de publication de fascicule du brevet: **29.04.92**

(51) Int. Cl.⁵: **A01B 3/40**, A01B 15/08, A01B 61/04

(21) Numéro de dépôt: **87905216.5**

(22) Date de dépôt: **06.08.87**

(86) Numéro de dépôt internationale :
**PCT/FR87/00308**

(87) Numéro de publication internationale :
**WO 88/01129 (25.02.88 88/05)**

(54) **CHARRUE A CORPS SYMETRIOUES.**

(30) Priorité: **12.08.86 FR 8611621**
**27.08.86 FR 8612143**
**19.11.86 FR 8616114**
**14.01.87 FR 8700347**
**15.04.87 FR 8705312**

(43) Date de publication de la demande:
**31.05.89 Bulletin 89/22**

(45) Mention de la délivrance du brevet:
**29.04.92 Bulletin 92/18**

(84) Etats contractants désignés:
**AT BE CH DE FR GB IT LI LU NL SE**

(56) Documents cités:
**FR-A- 1 169 349**      **FR-A- 1 298 109**
**FR-A- 1 412 348**      **FR-A- 2 244 392**
**FR-A- 2 390 079**      **US-A- 3 115 191**

(73) Titulaire: **COSTE, Denis**
**24, rue Georges-Denancé**
**F-93270 Sevran(FR)**

(72) Inventeur: **COSTE, Denis**
**24, rue Georges-Denancé**
**F-93270 Sevran(FR)**

(74) Mandataire: **Kügele, Bernhard et al**
**NOVAPAT-CABINET CHEREAU 63 bis, boulevard Bessières**
**F-75017 Paris(FR)**

## Description

La présente invention concerne une charrue comportant au moins un corps symétrique unique pour les deux sens de labour comprenant un attelage, un bâti principal, muni d'un axe, autour duquel oscille une poutre recevant un porte-corps qui supporte le corps qui est composé d'un soc et d'un versoir symétriques ainsi que d'un moyen de guidage arrière.

Jusqu'à ce jour l'inversion du sens de travail nécessité par le labour dit "à plat" était réalisée par la rotation du bâti porte-corps ce dernier recevant des corps "droits" et des corps "gauches" ce qui augmente le nombre de pièces, et alourdit le poids de la charrue, au détriment de son prix et de la performance du tracteur. Chaque corps est muni d'une pièce latérale appelée "contresep" prenant appui sur la muraille du sillon et destinée à éviter le dérapage latéral de la charrue causé par l'effort de la terre sur le versoir, ce dernier faisant un angle notoire avec la ligne d'avancement. La présence des contreseps augmente encore la longueur, la bande de terre à retourner ne pouvant s'effectuer librement qu'après le passage de chacun d'eux fixé sur le corps précédent.

Avec les charrues réversibles classiques, il est connu que le bâti support des corps pivote autour d'un axe horizontal fixe sur l'attelage, la position parallèle au sol des corps au travail étant obtenue par limitation de la fin de course du mouvement de rotation. Il est connu le principe de la charrue à corps symétriques présentant un pivot orienté verticalement autour duquel oscille la poutre porte-corps alors entraînée ou guidée par un système réglable fixé à l'attelage lui permettant progressivement dans sa course de venir dans une position plaçant les corps parallèlement au sol.

Il est connu le principe des corps symétriques, mais leurs versoirs, constitués d'éléments de forme cylindrique ou semi-hélicoïdale trop longs à leur partie supérieure, arrière et avant, provoquant par suite d'un manque d'angle de fuite vertical vers l'arrière de bas en haut, des bourrages frontaux conduisant à une pénétration insuffisante et à un enfouissement irrégulier de la matière organique. De plus, la jonction de la face latérale extérieure du soc avec la face avant, en éperon, du versoir constitue un angle dans le creux duquel sont retenues les racines du sol provoquant plus rapidement le bourrage au moment de la rentrée dans le sol lors de l'utilisation suivante de la même face latérale du versoir.

Le certificat d'addition français n° 2 390 079 décrit une charrue à versoirs symétriques, comportant une tête à deux éléments distincts supportant une poutre soumise à l'action d'un vérin commandant une tringlerie à plusieurs points d'appui sur la poutre et sur la tête par des âges recevant un système de sécurité. Les versoirs font parti des corps qui comportent également des socs en plusieurs pièces . La charrue comporte également des rasettes à plusieurs modes de fixation.

Il est connu le soc en 2 éléments afin que la partie avant qui ouvre le sillon et s'use plus vite, puisse être changée avant la partie arrière.

Avec les corps classiques, il est connu principalement 2 équipements pour projeter à l'avant du corps en direction du sillon creusé par le corps précédent, les débris de surface : le déflecteur pièce incurvée posée à l'avant de la partie supérieure du versoir, et la rasette placée devant la partie la plus à l'avant du versoir, ces 2 équipements n'ayant pour fonction que de balayer la partie supérieure proche de l'extérieur de la bande à labourer sur une largeur inférieure à la moitié de celle-ci. Dans le cas du corps symétrique, la présence en double de ces unités connues sur les charrues actuelles ne permet pas, sans bourrage causé par ceux situés devant l'arrière du versoir, de travailler. En effet, entre les 2 déflecteurs, il y a obstruction. Avec les rasettes, celle située face à l'arrière doit s'escamoter pour ne pas gêner le flot de terre arrivant de l'avant du versoir.

Actuellement pour répondre à des conditions de terres variées, il est nécessaire d'avoir recours à des versoirs de formes différentes particulièrement à leur extrémité arrière, ce qui conduit le constructeur à stocker une variété de corps. Un même utilisateur ne peut procéder à un changement de corps selon les conditions qu'il rencontre sur son exploitation ce qui serait trop onéreux et prendrait trop de temps. Sur ces charrues actuelles, il ne peut également faire varier l'angle des corps.

Il est connu enfin des systèmes de sécurité des corps de charrue permettant à l'arête du soc de remonter dans un plan horizontal qui se déplace verticalement plus ou moins parallèlement au sol avec la possibilité de s'escamoter, la pointe du soc pivotant autour d'un axe, mais les 2 opérations ne sont pas simultanées et alors présentent chacune leur inconvénient, la première d'avoir un corps qui reprend la profondeur choisie sur une distance trop longue, la seconde d'avoir le versoir dirigée vers la verticale et ne retournant plus la terre ce dernier inconvénient se retrouvant sur tous les autres systèmes dont le soc pivote dans une seule ou une infinité de directions autour d'un pivot dans le premier cas, ou d'un point dans le second.

Jusqu'à ce jour seules les charrues d'une autre catégorie utilisant des disques en mouvement rotatif effectuent avec un seul élément travaillant le sol, le labour dit "à plat", mais cet outil de conception différente, par manque de frottement de la terre sur une partie fixe ne donne pas la satisfaction demandée par un très grand nombre d'utilisateurs.

La présente invention a pour but d'offrir des possibilités répondant aux insuffisances ou inconvénients énumérés ci-dessus et d'offrir des solutions, soit plus efficaces ou/et moins coûteuses.

Ce but est atteint avec une charrue du type mentionné en haut, qui est caractérisé en ce que le versoir symétrique (11) présente une surface travaillante concave creuse présentant une courbure horizontale 46 et une courbure verticale 47.

Les différentes parties de l'invention seront mieux comprises à la lecture des descriptions suivantes et à l'examen des dessins annexés qui montrent à titre d'exemples non limitatifs quelque modes de réalisation des divers éléments dans le cadre de l'invention. Sur ces dessins :

- la figure 1 représente une vue en plan d'une charrue au travail versant le terre à droite suivant l'invention, excepté les équipements : déflecteur, rasettes, sécurité des corps cités plus loin. En médaillons : A commande pivot avant, B commande pivots arrières 55.
- la figure 2 représente le même ensemble en coupe longitudinale, la poutre porte-corps étant en position médiane.
- la figure 3 représente un système de verrouillage entre le bâti d'attelage et le bâti principal (la poutre se déplaçant de gauche à droite à l'avant comme le montre son galet 6), lequel supporte la poutre porte-corps qui en pivotant libère lesdits bâtis : vue en perspective suivant aa' (F fig.2).
- la figure 4 représente la forme d'un corps classique.
- la figure 5 représente la forme d'un corps, versoir et soc, suivant l'invention.
- la figure 6 représente un gouvernail arrière, positionné sur le corps arrière, ou commandé par le système de pivotement des corps sur la poutre.
- la figure 7 représente un déflecteur de corps règlable par rapport au versoir améliorant le travail du corps.
- la figure 8 représente un système alternatif de rasettes opérant aussi comme partie du versoir.
- la figure 9 représente une vue de profil d'un système de sécurité à plusieurs directions.
- la figure 10 représente une 1/2 vue arrière du même ensemble.
- la figure 11 représente une perspective détaillée du chemin de roulement du même système de sécurité.
- la figure 12 représente en perspective un système unique de rasette commandé par le pivotement du support du corps.
- les figures 13, 14 et 15 représentent des vues schématiques de la rasette respectivement dans les positions à droite, médiane, à gauche.

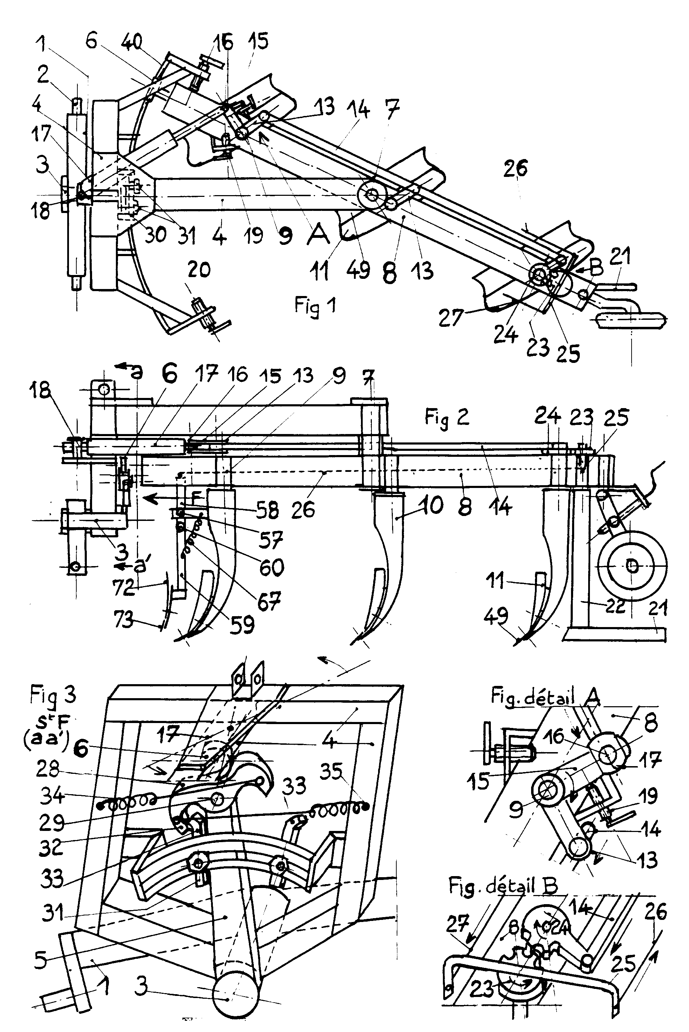

L'ensemble constitué par les figures 1, 2 et 6 bis comprend un bâti d'attelage 1 recevant les tourillons 2 attelés aux bras de traction du tracteur, un arbre pivot 3 qui le relie au bâti principal 4 pivotant sur lui, un bras 5 dont l'autre extrémité est munie d'un crochet de verrouillage 28 desdits 2 bâtis et dont la description suivra plus loin. Le bâti principal 4 est muni dans sa partie arrière horizontale d'un pivot vertical 7 autour duquel oscille de droite à gauche et vice versa la poutre 8 sur laquelle sont aménagés un nombre de pivots 9 fixent avec les supports 10 des éléments travaillant le sol, les versoirs 11 et socs 12 par l'intermédiaire du sep 36. Chaque pivot 9 peut recevoir entre lui et le sep 36 à la place de l'étançon rigide 10 une option de système de sécurité tel que décrit plus loin. Les pivots 9 présentent fixé sur eux un bras 13, l'ensemble de tous les bras étant reliés par la connection 14. L'un des pivots 9 possède en plus un bras 15 muni à son extrémité d'un axe 16 recevant la tige du piston du vérin hydraulique 17 dont la tête oscille sur un axe 18 solidaire du bâti principal 4. Deux jeux de butées règlables 19 et 20 fixées respectivement les premières sur la poutre 8 et les secondes sur le bâti 4 limitent respectivement l'amplitude des corps par rapport à la poutre délimitant l'angle d'attaque des corps, et la course de la poutre délimitant la largeur de travail totale des corps. Un gouvernail 21, situé derrière le dernier soc, est fixé à la partie inférieure d'un arbre 22, pivotant sur la poutre 8, et reçoit rigidement un pignon 23 engrenant avec un autre pignon 24 solidaire du dernier pivot 9 ou tout autre moyen de liaison entre 22 et 9. L'arbre 22 reçoit un double bras 25 à chaque extrémité duquel est connecté à droite un câble 26 reliant les manches de rasettes du même côté de la poutre 8, à gauche un autre câble 27 reliant les manches de rasettes de l'autre côté. Le double bras peut angulairement être réglé au moyen de 2 lumières par rapport à l'arbre 22, lorsque l'on fait varier la largeur de travail sans changer l'angle d'attaque des corps, afin de maintenir les rasettes en bonne position.

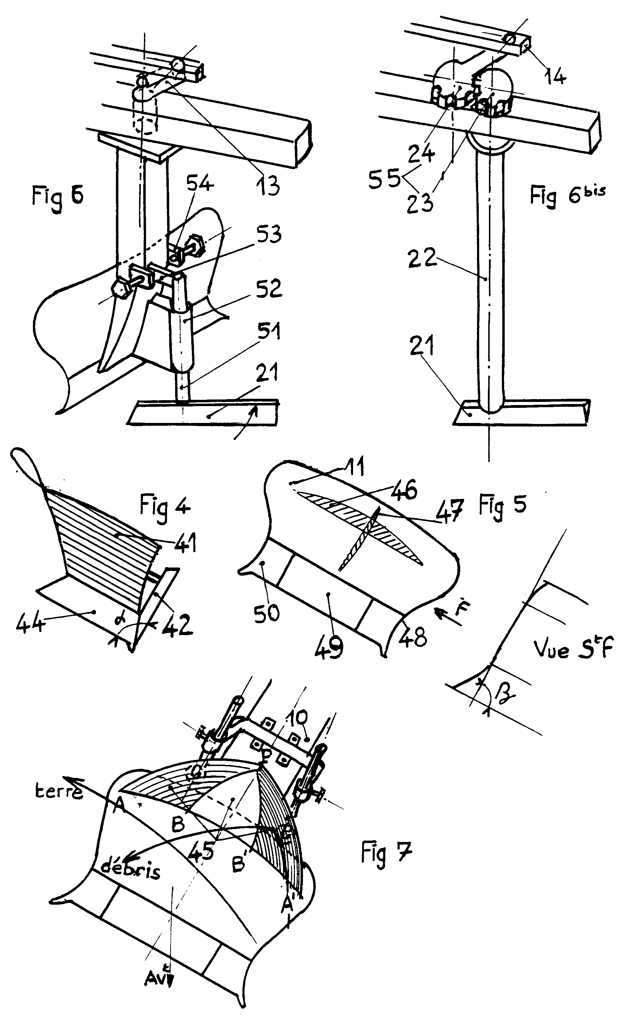

L'ensemble constitué par la figure 3 comprend un bras 5 solidaire de l'arbre pivot 3. A l'extrémité du bras 5 est articulé un crochet double 28 par l'intermédiaire de l'axe 29. Un secteur 3 solidaire du bâti 4 reçoit 2 butées réglables 31 qui limitent la course du bâti 4 en venant stopper ce dernier par le contact de ses butées contre le bras 5, en même temps que la partie crochetée 32 correspondante de crochet 28 vient s'accrocher dans la butée en 33 et est maintenue en place par le ressort 34 tirant sur le crochet, l'autre extrémité 35 étant solidaire du bâti 4. L'autre ressort opposé remplît la même fonction en tirant également sur l'autre extrémité du crochet. La position et les fixations des ressorts à leurs extrémités et la position de l'axe 29 sont elles que, lorsque le crochet double pivote de droite à gauche sous la poussée du galet 6 fixé à l'extrémité de la poutre 8 (alors en mouvement sous l'effort du vérin hydraulique) et qui vient heurter alternativement les rampes du crochet, les lignes de tractions des ressorts passent alternativement de part et d'autre de l'axe 29. Ainsi le crochet est, lorsque la poutre se trouve en position de travail, maintenu en place en partie 33, et lorsqu'elle pivote, en contact avec la rampe de la butée 31 jusqu'à ce qu'il s'enclenche en 33, le bâti pivotant et venant s'appuyer sur la butée. La distance horizontale dans un plan vertical entre le pivot 3 et l'axe 7 est choisie pour qu'une charrue de 3 corps et plus, selon l'invention, conduise avec les éléments que reçoit la poutre, à un poids plus important à l'arrière de l'axe 7 qu'à l'avant. Ainsi dès qu'elle dépasse le plan de symétrie ladite poutre après avoir provoqué le déverrouillage des 2 bâtis provoque son basculement avec celui du bâti principal 4 sans aucun guidage ou autre moyen, pour se placer au niveau correct du côté opposé limité par l'une des butées 31, la ceinture de repos 40, sur laquelle repose le galet 6 ne jouant nullement le rôle de rampe de mise à niveau, n'étant pas au surplus reliée au bâti d'attelage 1, mais fixée sur le bâti 4.

L'ensemble constitué par la figure 4 montre un corps classique comprenant un versoir 41 dont toutes les génératrices horizontales sont des lignes droites ou convexes fuyantes vers l'arrière, ce qui exige un versoir long pour obtenir un retournement correct de la bande de terre, sinon la terre sans être suffisamment retournée retombe derrière lui. L'angle d'attaque frontale $\alpha$ formé par une génératrice horizontale et la ligne d'avancement parallèle au contre-sep 42, est assez important pour que la pression sur le versoir exige cette plaque latérale sur tous les corps pour éviter tout dérapage latéral de la charrue . Avec un angle choisi $\alpha$, plus le versoir est long, plus la terre par son adhérence demande une puissance de traction supplémentaire ajoutée à celle demandée par la pression latérale de sep 42 sur la muraille du sillon sur laquelle il s'appuie. Le soc est constitué d'une seule pièce 44 présentant ou pas une pointe à la partie la plus à l'avant pour faciliter par éclatement de la terre la pénétration du corps, ou au maximum en 2 pièces, celle à l'avant présentant une pointe et étant remplaçable plus fréquemment.

L'ensemble constitué par la figure 5 représente un corps suivant l'invention. La face travaillante du versoir 11 présente, suivant l'invention, une surface concave qui peut représenter en partie ou en totalité la surface du versoir, les génératrices horizontales 46 concaves selon la forme générale, correspondant à un type de terre à labourer, n'ont pas la même concavité de bas en haut. La concavité est en général plus prononcée en haut pour accentuer le retournement, ce qui diminue la longueur effective utile de passage de la terre sur le versoir. L'angle $\alpha$ d'attaque du versoir est plus réduit ce qui évite l'emploi de contre-sep sur les corps : un tel corps creux dans les deux sens, horizontal 46 et vertical 47, conduit à un versoir plus court à sa partie supérieure et à un effort latéral réduit, ce qui demande moins de puissance de traction. Cette réduction de longueur permet d'obtenir, suivant l'invention, une arête frontale du versoir à l'avant prise dans sa partie la plus proche de la verticale, projetée sur un plan vertical parallèle à l'avancement, qui soit une ligne générale proche d'une droite qui forme un angle $\beta$ avec l'horizontale fuyante vers l'arrière toujours inférieur à 90°. De plus pour éviter un angle vif freinant l'écoulement des débris, tels que racines ou végétaux, à la jonction soc/versoir, cette dernière présente une partie courbe 48 suivant l'invention. Le soc 11 a la particularité suivant l'invention d'être constitué de plusieurs éléments, incluant 2 pièces symétriques 50 chacune incorporant ou non une pointe, lesquelles 2 pièces sont séparées entre elles par au moins un élément tranchant 49 du soc.

L'ensemble constitué par la figure 6 comprend un axe 51 orienté verticalement, recevant à sa partie inférieure une plaque guide 21 dont l'arête inférieure est située plus ou moins au niveau inférieur du soc 12, pivotant dans un fourreau 52 solidaire de l'étançon 10 et recevant à sa partie supérieure un taquet 53 venant, alternativement selon le sens de travail, en contact des butées 54 règlables selon l'angle d'attaque adopté pour les corps. Au lieu d'être fixé à l'étançon 10, le fourreau 52 peut être logé dans la poutre 8, l'arbre 22 (fig. 6bis) étant relié à la commande 14 de pivotement des corps par la connection 55 assurant ainsi le pivotement du gouvernail en même temps que celui des corps.

L'ensemble constitué par la figure 7 a la forme générale 45 de 3 côtes de parapluie. Les 2 côtes extrêmes sont symétriques alors que la côte centrale de surface pouvant être différente a son plan de symétrie vertical confondu avec celui du corps. La pointe P est la partie la plus haute dirigée vers l'avant et le pourtour inférieur est en contact avec le versoir. Les côtes extrêmes ABP et A'B'P jouent alternativement pour chaque sens de labour le rôle de déflecteur de débris de surface qui alors retombent plus à l'avant pour être enfouis, la côte PBB' servant à diriger la terre vers l'arrière du versoir. L'ensemble est connecté à l'étançon 10 par un système connu de tringlerie permettant son régla-

ge en hauteur selon la profondeur de labour. Un tel déflecteur, suivant l'invention, est une amélioration du versoir 11.

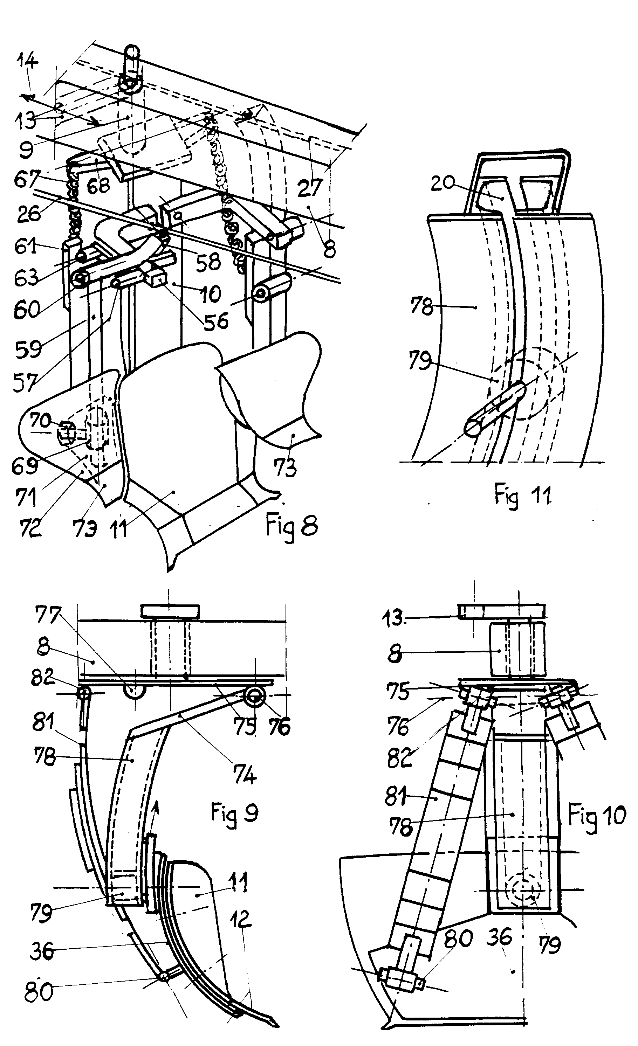

L'ensemble constitué par la figure 8 comprend un groupe de 2 rasettes droite et gauche. Chacune est constituée par un support 56 assemblé à l'étançon 10, ledit support recevant un axe 57 autour duquel pivote le manche supérieur 58 relié au manche inférieur 59 par l'articulation 60, limitée dans son mouvement par la plaque d'appui 61 sur la butée 63 règlable sur le support 56 sous l'action du ressort 67 relié à l'étançon 10 par l'intermédiaire du bras 68. Le manche inférieur 59 reçoit un fourreau 69, règlable sur lui par la vis 70, lequel reçoit une plaque formée 71 sur laquelle sont fixés le versoir 72 et le soc 73. Tous les manches d'un même côté sont reliés par un câble 26 connecté à l'arrière à une extrémité du double bras 25 connecté à l'arbre 22 du gouvernail 21, l'autre extrémité recevant le câble 27 reliant les manches 58 des rasettes opposées.

L'ensemble constitué par les figures 9, 10 et 11 comprend la partie supérieure 74 de l'étançon reliée au pivot 9 par une semelle 75 et une articulation 76 limitée en oscillation par la butée souple 77, la partie rail 78 rigide sur la partie supérieure 74, dans laquelle roule au moins un galet 79 supporté par un axe fixé sur le sep 36 recevant le versoir 11 et le soc 12 ainsi que les extrémités en 80 d'une double liaison souple 81, les extrémités supérieures oscillant chacune sur un axe 82 solidaire de la semelle 75.

L'ensemble constitué par la figure 12 comprend les bras 83 rigides sur le support 10 et recevant le galet 84 pouvant se déplacer dans la lumière 85 du bras oscillant 86 autour de l'axe 87 de la poutre 8. Le bras 86 reçoit le support 88 des versoir et soc, qui pivote sur lui en 89 et qui reçoit rigide avec lui, un bras 90 recevant une connection rigide ou souple 91 dont l'autre extrémité est reliée en 92 à la poutre 8.

Le fonctionnement est le suivant :

Lorsque le tracteur arrive à l'extrémité du champ pour revenir dans la raie effectuée par le dernier corps, après avoir relevé la charrue hors du sol et que le labour a été effectué à droite par exemple, le vérin hydraulique 17 est actionné, la poutre 8 quitte sa butée de droite 20, son galet avant 6 vient faire basculer le crochet 28 par sa poussée sur la rampe 37 ce qui déconnecte la partie 32 avec la butée 33 situés à droite et rend libre les 2 bâtis, le bâti 1 d'attelage et le bâti 4 principal de pivoter l'un par rapport à l'autre jusqu'à ce que le centre de gravité, situé à l'arrière de l'axe 7, sous l'action du vérin, après être passé dans le plan vertical de symétrie passant par l'axe 3, venant du côté opposé à ce plan, le mouvement de pivotement de gauche à droite du bâti principal 4 soit stoppé par le contact de la butée opposée 31 de gauche sur le bras 5, le galet 6 verrouillant en la butée 33 le crochet 28 maintenu en place sous la traction du ressort 34 dont la ligne de traction est passée au-dessous de l'axe 29. La poutre continue sa course jusqu'à ce qu'elle rencontre la butée de gauche 20. Si au cours de son pivotement, le bras 15 sur lequel tire la tige du vérin hydraulique n'a pas bougé, après le contact de la poutre 8 sur la butée 20, le vérin pousse le bras 15 jusqu'à son contact avec la butée 19 de gauche suivant l'angle d'attaque frontale choisi pour les corps.

La commande 14 de liaison entre les bras 13 des pivots 9 en se déplaçant a également fait pivoter de droite à gauche le gouvernail arrière 21. L'arbre 22 en tournant a également mis en mouvement les câbles 26 et 27 changeant le positionnement des rasettes aidé en cela par la tension des ressorts 67 : celles de droite ont quitté leur position de versoir pour venir dans leur fonction de rasette et le contraire pour celles de gauche. En pivotant dans le fourreau 69, la forme du labour change.

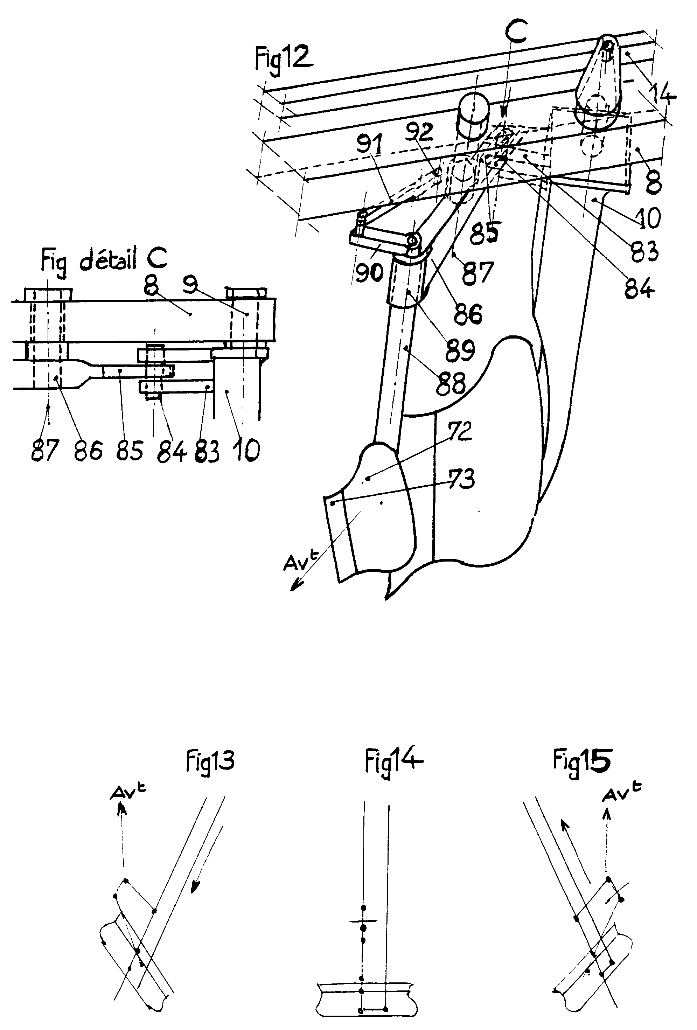

Lorsqu'un seul ensemble d'éléments de rasette unique équipe la charrue, pour passer d'un sens de travail à l'autre le pivot 9 entrainé par la connection 14 oblige le galet 84 à faire pivoter le bras 86 tout en se déplaçant dans la lumière 85 de ce dernier. Pendant ce temps la connection 91 oblige le support 88 à pivoter. L'ensemble de ces mouvements conduit à placer correctement la rasette, d'une position de travail à celle opposée comme montré par les figures 13 et 15.

Lorsque les corps sont protégés par un système de sécurité, la commande des rasettes étant hydraulique et indépendante par corps pour ne pas avoir de déplacement intempestifs de celles-ci au cours des mouvements du système de sécurité, et que la partie en terre, soc ou versoir, rencontre un obstacle, différents mouvements sont possibles : si l'obstacle tel qu'une pierre est situé sur la partie avant le corps oscille autour de l'axe support du galet 79 qui roule dans le rail 78, ce qui comprime les systèmes élastiques qui le repositionnent après le passage de l'obstacle ; si l'obstacle est situé sur l'arrière ou la partie centrale, le corps remonte guidé par le galet dans le rail 78 et peut aussi provoquer le pivotement de la partie supérieure 74 et du rail autour de l'axe supérieur 76. Enfin les 3 mouvements oscillation, roulement du galet et pivotement autour de l'axe supérieur, peuvent être provoqués simultanément sous la pression des systèmes élastiques 81. Dans la majorité des cas, le mouvement du corps se situe proche de la parallèle au sol, ce qui assure une meilleure protection de l'ensemble de la charrue au niveau de la résistance mécanique et une plus grande continuité dans le retournement de la terre.

## Revendications

1. Charrue comportant au moins un corps symétrique unique pour les deux sens de labour comprenant un attelage (1), un bâti principal (4), muni d'un axe (7), autour duquel oscille une poutre (8) recevant un portecorps (10) qui supporte le corps qui est composé d'un soc (49) et d'un versoir (11) symétriques ainsi que d'un moyen de guidage arrière (21), le versoir symétrique (11) présentant une surface travaillante concave creuse présentant une courbure verticale, caractérisée en ce que la surface travaillante concave creuse présente une courbure horizontale (46) aussi.

2. Charrue selon la revendication 1, caractérisée en ce que l'attelage (1) comporte un pivot (3), et en ce que la charrue comporte en outre un système de blocage (4) qui comporte l'axe (7), l'oscillation de la poutre (8) autour de cet axe (7) étant commandée par vérin hydraulique (17), et en ce que le porte-corps (10) est relié à ladite poutre (8) par un moyen de sécurité capable de fonctionner dans les deux sens de labour.

3. Charrue selon la revendication 1 ou 2, caractérisée en ce qu'elle comporte au moins une rasette pour les deux sens de labour.

4. Charrue selon l'une quelconque des revendications 1 à 3, caractérisée en ce que le moyen de guidage arrière est constitué de façon à ce qu'il est utilisable pour les deux sens de labour.

5. Charrue selon la revendication 1, caractérisée en ce que le versoir (11) comporte des génératrices horizontales qui ont un rayon de courbure variable de bas en haut du versoir.

6. Charrue selon la revendication 5, caractérisée en ce que les génératrices horizontales du versoir concave ont un rayon de courbure plus prononcé dans la partie haute du versoir que dans la partie basse.

7. Charrue selon l'une quelconque des revendications 1 à 6, caractérisée en ce que la jonction de chaque arête latérale du versoir avec le soc est une courbe concave (48).

8. Charrue selon l'une quelconque des revendications 1 à 7, caractérisée en ce que le soc symétrique est composé d'un élément central (49) et de deux éléments droit et gauche extrêmes (50), ces derniers présentant une forme plus ou moins pointue.

9. Charrue selon l'une quelconque des revendications 1 à 8, caractérisée en ce l'étançon porte-corps (10) inclu deux éléments (36 et 78) oscillant l'un par rapport à l'autre dans un plan parallèle à l'arête tranchante du soc (12), et ensemble dans un plan perpendiculaire à ladite arête tranchante du soc (12).

10. Charrue selon l'une quelconque des revendications précédentes , caractérisée en ce que l'étançon porte-corps (10) inclu deux éléments (36 et 78) se déplaçant longitudinalement l'un par rapport à l'autre, l'un (36) coulissant dans une lumière (20) de l'autre et oscillant, d'une part entre eux dans un plan parallèle à l'arête tranchante du soc (12), et d'autre part ensemble dans un plan perpandiculaire à ladite arête tranchante du soc (12).

11. Charrue selon l'une quelconque des revendications 3 à 10, caractérisée en ce que le pivotement de la rasette est assuré par un bras pivotant (86) lui-même incluant un axe calé (84) entraîné par un bras (83) solidaire à l'étançon (10).

12. Charrue selon l'une quelconque des revendications précédentes, caractérisée en ce que le moyen de guidage est agencé pour pivoter sur un axe (51) pour s'adapter aux deux sens de labour.

## Claims

1. A plough including at least a single symmetrical body adapted for both ploughing directions comprising a coupling (1), a main frame (4), provided with an axle (7) , about which a beam (8) swings which receives a body-holder (10) maintainaing said body formed of a symmetric ploughshare (49) and mould-board (11) as well as a back guiding means (21), with said symmetric mould-board (11) having a hollow concave-shape working surface with a vertical curvature, characterized in that said hollow concave-shape working surface also has a horizontal curvature (46).

2. The plough of claim 1, characterized in that said coupling (1) includes a pivot (3), and in that said plough further includes a blocking system (4) which comprises said pivot (7), with said beam (8) swinging about the axle (7) being controlled by a hydraulic cylinder (17), and in that said body-holder (10) is connected to said beam (8) by a safety means operating in both ploughing directions.

3. The plough of claim 1 or 2, characterized in that it includes at least a knife cutter for both ploughing directions.

4. The plough of any claim 1-3, characterized in that said back guiding means is arranged so as to be used for both ploughing directions.

5. The plough of claim 1, characterized in that said mould-board (11) includes horizontal generatrixes with a curvature radius varying from the bottom to the top of the mould-board.

6. The plough of claim 5, characterized in that the horizontal generatrixes of said concave moul-board have a curvature radius more pronounced in the upper part than in the lower part thereof.

7. The plough of any claim 1-6, characterized in that the connexion of each side edge of said mould-board with the ploughshare is a concave curve (48).

8. The plough of any claim 1-7, characterized in that said symmetric ploughshare includes a central element (49) and two right and left end elements (50), with the latter having a more or less pointed shape.

9. The plough of any claim 1-8, characterized in that the body-holder (10) stay includes two elements (36 and 78) which swing in relation one another in a plane parallel to the ploughshare (12) sharp edge, and together in a plan orthogonal to said ploughshare (12) sharp edge.

10. The plough of any preceding claim, characterized in that said body-holder (10) stay includes two elements (36 and 78) which longitudinally move in relation one another, with one (36) sliding into an aperture (20) of the other and swinging between them in a plane parallel to the ploughshare (12) sharp edge, one one hand, and together in a plane orthogonal to said ploughshare (12) sharp edge, on the other hand.

11. The plough of any claim 3-10, characterized in that said knife cutter pivoting is ensured by a pivoting arm (86) which includes a wedged axle (84) driven by an arm (83) integral with said stay (10).

12. The plough of any preceding claim, characterized in that said guiding means is arranged so as to pivot on an axle (51) in order to match both ploughing directions.

**Patentansprüche**

1. Pflug bestehend aus einem einzigen symmetrischen Körper für beide Arbeitsrichtungen, bestehend aus einer Kupplung (1), einem Hauptkörper (4), der mit einer Achse (7) versehen ist, um die ein Balken (8) schwenkt, der einen Körperträger (10) aufnimmt, der den Körper trägt, der aus einer Pflugschar (49) und einem Streichblech (11), die symmetrisch ausgebildet sind, sowie aus einer hinteren Führungseinrichtung besteht, wobei das symmetrische Streichblech (11) eine konkarve, vertiefte Arbeitsfläche mit einer vertikalen Krümmung hat,
**dadurch gekennzeichnet**, daß die konkarve, vertiefte Arbeitsfläche auch eine horizontale Krümmung (46) hat.

2. Pflug nach Anspruch 1,
**dadurch gekennzeichnet**, daß die Kupplung (1) einen Schwenkzapfen (3) aufweist, und daß der Pflug außerdem ein Blockiersystem hat, das die Achse (7) umfaßt, wobei die Schwenkbewegung des Balkens (8) um die Achse (7) durch einen Hydraulikzylinder (17) gesteuert wird, und daß der Träger (10) mit dem Balken (8) durch eine Sicherheitseinrichtung verbunden ist, die in beiden Arbeitsrichtungen wirken kann.

3. Pflug nach Anspruch 1 oder 2,
**gekennzeichnet durch** wenigstens eine Zusatzpflugschar für die beiden Arbeitsrichtungen.

4. Pflug nach einem der Ansprüche 1 bis 3,
**dadurch gekennzeichnet**, daß die hintere Führungseinrichtung für die beiden Arbeitsrichtungen verwendbar ausgebildet ist.

5. Pflug nach Anspruch 1,
**dadurch gekennzeichnet**, daß das Streichblech (11) horizontale Erzeugende aufweist, die einen am Streichblech von unten nach oben unterschiedlichen Krümmungsradius haben.

6. Pflug nach Anspruch 5,
**dadurch gekennzeichnet**, daß die horizontalen Erzeugenden des konkarven Streichblechs im oberen Teil des Streichblechs einen ausgeprägteren Krümmungsradius als im unteren Teil haben.

**7.** Pflug nach einem der Ansprüche 1 bis 6, **dadurch gekennzeichnet**, daß die Verbindung jeder Seitenkante des Streichblechs mit der Pflugschar eine konkarve Krümmung (48) hat.

**8.** Pflug nach einem der Ansprüche 1 bis 7, **dadurch gekennzeichnet**, daß die symmetrische Pflugschar ein zentrales Element (49) und zwei rechte und linke äußere Elemente (50) hat, die eine mehr oder weniger spitze Form haben.

**9.** Pflug nach einem der Ansprüch 1 bis 8, **dadurch gekennzeichnet**, daß der Träger (10) zwei Elemente (36 und 78) hat, die relativ zueinander in einer Ebene parallel zur Schneidkante der Pflugschar (12) und zusammen in einer Ebene senkrecht zur Schneidkante der Pflugschar (12) schwenkbar sind.

**10.** Pflug nach einem der vorhergehenden Ansprüche **dadurch gekennzeichnet**, daß der Träger (10) zwei Elemente (36 und 78) aufweist, die relativ zueinander in Längsrichtung verschiebbar sind, wobei das eine in einem Schlitz (20) des anderen gleitet und einerseits in einer Ebene parallel zur Schneidkante der Pflugschar (12) schwenkt, und andererseits beide in einer Ebene senkrecht zur Schneidkante der Pflugschar (12) schwenken.

**11.** Pflug nach einem der Ansprüche 3 bis 10, **dadurch gekennzeichnet**, daß die Schwenkbewegung der Zusatzpflugschar mittels eines Schwenkarms (86) erfolgt, der eine festsitzende Achse (84) aufweist, die von einem mit dem Träger (10) verbundenen Arm (83) angetrieben wird.

**12.** Pflug nach einem der vorhergehenden Ansprüche, **dadurch gekennzeichnet**, daß die Fuhrungseinrichtung zur Schwenkbewegung auf einer Achse (51) zur Anpassung an beide Arbeitsrichtungen betätigt wird.

Fig 1

Fig 2

Fig 3
S<sup>t</sup>F
(a a')

Fig. détail A

Fig. détail B

Fig 6

54
53
52
51
21
13

Fig 6 bis

14
24
55
23
22
21

Fig 4

41
44
42
α

11
46
47 Fig 5
50
49
48
F

Vue S<sup>t</sup>F

β

10
terre
A
B
débris
45
B'
A'
Av<sup>t</sup>

Fig 7

Fig 8

Fig 11

Fig 9

Fig 10

Fig 12

C

14

91 92

8

10

83

84

85

90

87

86

89

88

72

73

Av^t

Fig détail C

8 9

87 86 85 84 83 10

Fig13

Av^t

Fig14

Fig15

Av^t